Europäisches Patentamt

European Patent Office

Office européen des brevets

(11) Publication number: **0 124 419**
**B1**

(12) **EUROPEAN PATENT SPECIFICATION**

(45) Date of publication of patent specification: **09.03.88**

(21) Application number: **84400780.7**

(22) Date of filing: **18.04.84**

(51) Int. Cl.⁴: **F 16 D 65/10**

(54) Backing plate assembly for a drum brake.

(30) Priority: **02.05.83 US 490762**

(43) Date of publication of application:
**07.11.84 Bulletin 84/45**

(45) Publication of the grant of the patent:
**09.03.88 Bulletin 88/10**

(84) Designated Contracting States:
**DE FR GB IT**

(56) References cited:
**WO-A-80/01505**
**US-A-3 548 976**
**US-A-3 998 297**
**US-A-4 332 310**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Turak, John L.**
**57350 McQuade Street**
**South Bend, IN. 46619 (US)**
Inventor: **Spaargaren, Robert**
**12800 Anderson Road**
**Granger, IN. 46350 (US)**

(74) Representative: **Brullé, Jean et al**
**Division Technique Service Brevets Bendix**
**Europe 126, rue de Stalingrad**
**F-93700 Drancy (FR)**

Courier Press, Leamington Spa, England.

## Description

This invention relates to a backing plate assembly for a drum brake wherein the backing plate supports a pair of brake shoes and a wheel cylinder which receives fluid pressure to move the pair of brake shoes into engagement with a drum to be braked.

There is a limited supply of crude oil from which fuel is obtained for motor vehicle consumption. As the supply is reduced the price for fuel is expected to increase so that a motor vehicle must consume as little fuel as possible in order to provide economical transportation and preserve the limited supply of crude oil. In response to this demand for efficiency, motor vehicles are being reduced in size and weight so that smaller engines can be used with smaller fuel consumption requirements. Brake assemblies for the motor vehicle are also being reduced in size and weight to support the reduced size and weight goals for the motor vehicle. In addition, the manufacture of a brake requires various machinery for each size of brake so that each size of brake requires a separate machine or die to generate the backing plate associated for each size of brake.

It has ben proposed to manufacture a drum brake backing plate from two parts. One of the parts is designed to accommodate the braking torque requirements while the second part is designed to enclose the brake to isolate the latter from the contaminants, such as dirt, stones, dust, snow, salt, etc. found on a roadway for the motor vehicle. To date the proposed two part construction for the backing plate has not been widely accepted by vehicle manufacturers.

The prior art is illustrated by US—A—3 548 967; US—A—3 576 237; US—A—3 998 297 and US—A—4 102 442. In US—A—3 548 976 and US—A—3 576 237, the radially outer part is made of lighter material than the radial inner part, but is burdened with support responsibility for the pair of brake shoes so that sufficient strength is required of the outer part. Consequently, the outer part is not designed solely for weight savings. In addition, the outer part requires separate adhesives or welding material for attachment with the inner part, thereby adding to the manufacturing cost of this type of two-part backing plate. In US—A—3 998 297 the outer part is redundant as the inner part extends outwardly to the drum so that the outer part is not required. And in US—A—4 102 442, the lightweight outer part overlaps with the inner part so that excess material for the lightweight outer part is required.

WO—A—80/01 505 further discloses a seal assembly for a drum brake which comprises a two-part backing plate, including a first part which transmits the braking forces developed during braking and guides the brake shoes in their movement, and a light-weight second part fixed to the first part for holding in position a sealing annular member which protects the drum brake from penetration of contaminants.

The present invention has for its object to reduce such a brake assembly in weight and to improve machining of such known constructions having a two-part backing plate wherein the second part is solely utilized for sealing enclosure purposes. And it is further object of the present invention that said second part of the backing plate should be designed of lightweight material without concern for torque taking or supporting characteristics, and can be easily coupled to the first part and uncoupled therefrom as for lining wear inspection.

This object is achieved, in accordance with the invention, and in a backing plate assembly of the kind comprising a first part adapted for attachment to a vehicle frame and a second part cooperating with the drum to substantially protect the drum brake from contaminants, said first part defining a reinforced portion substantially at the radial extremity thereof to transmit braking forces developed during braking, said reinforced portion further being engageable with said pair of brake shoes to direct movement of the latter during braking, said second part being coupled to said reinforced portion to substantially enclose the drum brake between the backing plate assembly and the drum, and said second part being of a thickness and material which is incapable of supporting said pair of brake shoes and extending substantially over the entire outer circumference of said first part, thanks to the fact that said first part includes a substantially flat portion for attachment to the vehicle frame, that said reinforced portion includes an inner wall contiguous with said flat portion and extending outwardly therefrom, a support wall offset from said flat portion and engageable with the pair of brake shoes, and an outer wall extending axially inwardly from said support wall, and that said second part is coupled to said outer wall. In a preferred embodiment of the invention, the first and second part cooperate to define a releasable coupling therebetween to enable said parts (30, 32) to be readily snapped together during assembly in the absence of further coupling means. Advantageously, said first part defines a plurality of cut-outs and said second part defines a plurality of flexible tabs adapted for disposition within said plurality of cut-outs when said parts are coupled together.

In addition, it is possible to utilize the first part with different second parts to accommodate drum brake assemblies with varying diameter and/or varying brake shoe widths. Since the second part is preferably made from plastic which is easily molded in a cost effective process, it is possible to provide one first part for many sizes of drum brake assemblies.

The invention will now be described with reference to the accompanying drawings wherein one embodiment of the invention is disclosed:

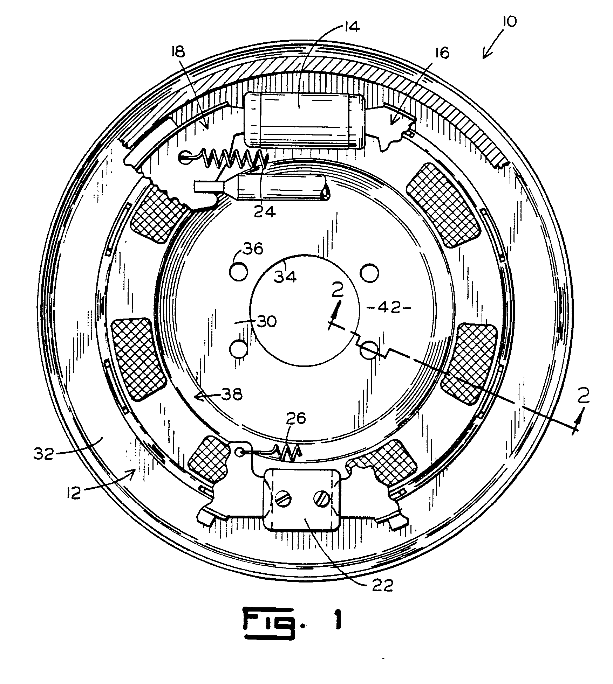

Figure 1 is a side view of a brake assembly utilizing the backing plate of the present invention;

Figure 2 is a cross sectional view taken along line 2—2 of Figure 1;

Figure 3 is a view similar to Figure 2 shown with a larger size brake assembly; and

Figure 4 is a perspective view of a portion of the backing plate assembly of Figure 2.

A drum brake assembly 10 includes a backing plate assembly 12 supporting a wheel cylinder or hydraulic actuator 14 and a pair of brake shoes 16 and 18. The wheel cylinder 14 receives fluid pressure during a brake application to expand the pair of brake shoes 16 and 18 into engagement with a drum 20 to be braked. Braking torque developed during braking is transmitted from the brake shoes to an anchor 22 formed by the backing plate assembly 12. Springs 24 and 26 retain the pair of brake shoes in engagement with the wheel cylinder 14 and the anchor 22, respectively.

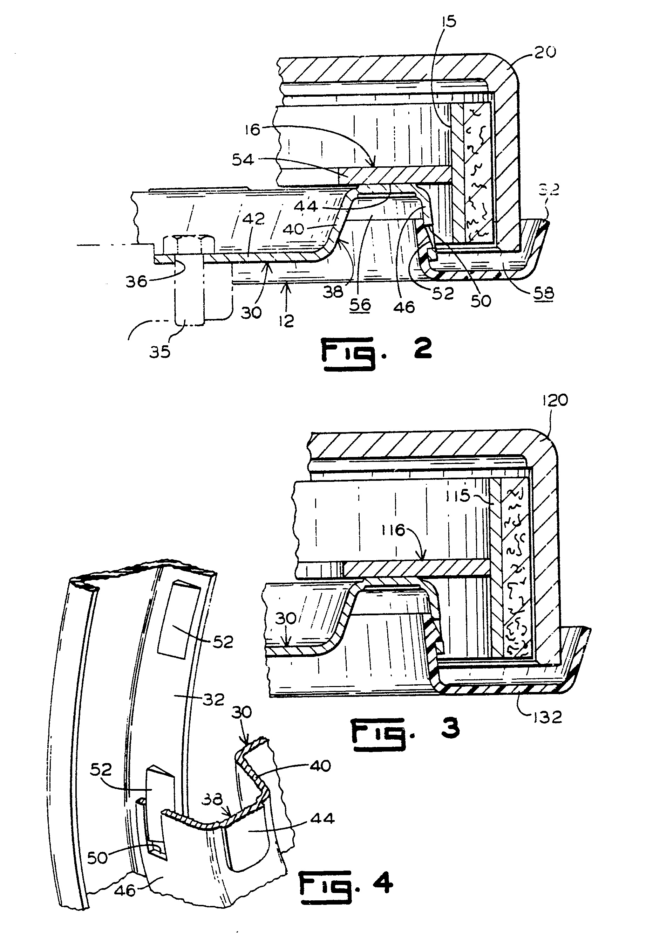

In accordance with the invention, the backing plate assembly 12 comprises a first part 30 and a second part 32. The first part 30 includes a central opening 34 with a plurality of openings 36 adjacent thereto for attaching the first part via bolts 35 to a vehicle frame. The first part forms a channel or reinforcing rib 38 extending circumferentially around the entire outer edge of the first part except for that portion of the first part receiving the wheel cylinder. The anchor 22 is formed on the reinforcing rib 38. Turning to Figure 2, the reinforcing rib 38 forms an inner wall 40 extending axially outwardly and adjacent a flat portion 42 forming openings 36 and 34, a support wall 44 offset axially outward the flat portion 42 and contiguous the inner wall 40, and an outer wall 46 extending axially inward from and contiguous with the support wall 44. The outer wall 46 forms a plurality of cut-outs 50 and the second part 32 is provided with flexible tabs 52 for disposition in the cut-outs 50 when the second part 32 is releasably coupled to the first part 30.

The support wall 44 engages the brake shoe 16 via brake shoe rim 54 to define a guide directing the movement of the brake shoe 16 as it slides on the support wall 44 during braking. The channel 38 forms a cavity 56 opening inwardly and the second part 32 forms a cavity 58 opening outwardly. The brake shoe 16 includes a web and lining extending into the cavity 58 and the drum 20 also extends into the cavity 58 such that the second part 32 is disposed closely adjacent the drum 20 to form a seal-like disposition to keep contaminants outside the drum and backing plate assembly.

Because the reinforcing rib 38 is circumferentially in line with the anchor 22, braking torque is directly applied to the reinforcing rib 38 and then spread over the flat portion 42 and the attachment means at openings 36. The second part 32 takes no braking torque.

In order to assemble the parts 30 and 32, the parts are positioned such that the radially inner lip 60 of the part 32 is aligned with the outer wall 46 of the part 30. Said inner lip is advanced into the cavity 56 so that the flexible tab 52 is permitted to extend into the cut out 50 in order to releasably couple the parts 30 and 32 together. The part 32 is easily separated from the part 30 when the tab 52 is withdrawn from the cut out. It is possible to inspect for brake shoe lining wear without removal of the drum 20 when the part 32 is separated from the part 30. The brake shoes, wheel cylinder and part 30 can remain secured to the vehicle frame when the part 32 is separated from the part 30 for lining wear inspection.

In Figure 3, a brake shoe 116 is shown with the first part 30. The brake shoe 116 is slightly larger in diameter than the brake shoe 16 and the width of rim 115 is larger than the width of a rim 15 for brake shoe 16. The brake shoe 116 is used with a larger drum 120. A new second part 132 is releasably coupled to the first part 30 in the same manner as the second part 32. However, the dimension of the new second part 132 is larger than part 32 in order to accommodate the larger drum 120.

In view of the foregoing, it is seen that the backing plate assembly part 30 can be used for different sizes of brake drums so that only the part 32 need be changed to accommodate the different sizes of brake shoes and drums. Since the second part 32 is free of torque, it can be made of lightweight inexpensive material such as plastic. Therefore, an increase in the size of the drum or the lining width will require a slight increase in cost for the backing plate assembly only with respect to the larger size part 132, as the first part 30 remains the same.

## Claims

1. A backing plate assembly (12) for a drum brake (10) with a pair of brake shoes (16, 18), comprising a first part (30) adapted for attachment to a vehicle frame and a second part (32) cooperating with the drum (20) to substantially protect the drum brake from contaminants, said first part (30) defining a reinforced portion (38) substantially at the radial extremity thereof to transmit braking forces developed during braking, said reinforced portion (38) further being engageable with said pair of brake shoes (16) to direct movement of the latter during braking, said second part (32) being coupled to said reinforced portion (38) to substantially enclose the drum brake (10) between the backing plate assembly (12) and the drum (20), and said second part (32) being of a thickness and material which is incapable of supporting said pair of brake shoes and extending substantially over the entire outer circumference of said first part (30), characterized in that said first part includes a substantially flat portion (42) for attachment to the vehicle frame, in that said reinforced portion (38) includes an inner wall (40) contiguous with said flat portion (42) and extending axially outwardly therefrom, a support wall (44) offset from said flat portion (42) and engageable with said pair of brake shoes, and an outer wall (46) extending axially inwardly from said support wall (44), and in that said second part (32) is coupled to said outer wall (46).

2. The backing plate assembly (12) of claim 1, characterized in that said first part (30) and said second part (32) cooperate to define a releasable coupling therebetween to enable said parts (30, 32) to be readily snapped together during assembly in the absence of further coupling means.

3. The backing plate assembly (12) of claim 2, characterized in that said first part (30) defines a plurality of cut-outs (50) and said second part (32) defines a plurality of flexible tabs (52) adapted for disposition within said plurality of cut outs (50) when said parts (30, 32) are coupled together.

4. The backing plate assembly (12) of any of claims 1 to 3, characterized in that said reinforced portion (38) defines a support wall (44) engageable with said pair of brake shoes (16, 18) and an outer wall (46) contiguous with said support wall (44), said outer wall (46) extending inwardly from siad support wall (44) to substantially define a channel, and in that said second part (32) is coupled to said outer wall (46) adjacent said channel.

5. The backing plate assembly (12) of any of claims 1 to 4, characterized in that said outer wall (46) extends axially inwardly past said flat portion (42) whereby said reinforced portion (38) forms a channel for reinforcement.

6. The backing plate assembly (12) of any of claims 1 to 5, characterized in that it further includes a plurality of second parts (32) of different dimensions adapted for attachment to said first part (30) one at a time, said plurality of second parts (32) providing for different sizes of pairs of brake shoes cooperating with said first part (30) whereby said first part (30) remains the same for the different sizes of brake shoes and their associated second parts (32).

**Patentansprüche**

1. Stützplatteneinheit (12) für eine Trommelbremse (10) mit einem Paar Bremsbacken (16, 18), mit einem ersten Teil (30), der an einem Fahrzeugrahmen befestigbar ist, und einem zweiten Teil (32), der mit der Trommel (20) zusammenwirkt, um die Trommelbremse im wesentlichen gegen Verschmutzungen zu schützen, wobei der erste Teil (30) im wesentlichen am radial äußeren Ende einen verstärkten Abschnitt (38) zur Übertragung von während des Bremsvorganges entstehenden Bremskräften aufweist, der desweiteren mit dem Paar Bremsbacken (16) in Eingriff bringbar ist, um die Bewegung der Bremsbacken während des Bremsens zu führen, und wobei der zweite Teil (32) so mit dem verstärkten Abschnitt (38) gekoppelt ist, daß er die Trommelbremse (10) zwischen der Stützplatteneinheit (12) und der Trommel (30) im wesentlichen umgibt, sowie eine Dicke besitzt und aus einem Material besteht, die bzw. das nicht in der Lage ist, das Paar Bremsbacken zu lagern, und sich im wesentlichen über den gesamten Außenumfang des ersten Teiles (30) erstreckt, dadurch gekennzeichnet, daß der erste Teil einen im wesentlichen ebenen Abschnitt (42) zur Befestigung am Fahrzeugrahmen aufweist, daß die verstärkte Abschnitt (38) eine Innenwand (40), die an den ebenen Abschnitt (42) stößt und sich von diesem axial nach außen erstreckt, eine gegenüber dem ebenen Abschnitt (42) versetzte Stützwand (44), die mit dem Paar Bremsbacken in Eingriff bringbar ist, und eine Außenwand (46) besitzt, die sich von der Stützwand (44) axial nach innen erstreckt, und daß der zweite Teil (32) mit der Außenwand (46) verbunden ist.

2. Stützplatteneinheit (12) nach Anspruch 1, dadurch gekennzeichnet, daß der erste Teil (30) und der zweite Teil (32) zusammenwirken und zwischen sich eine lösbare Kupplung bilden, so daß die Teile (30, 32) bei der Montage in Abwesenheit von weiteren Kupplungseinrichtungen schnell miteinander verrastet werden können.

3. Stützplatteneinheit (12) nach Anspruch 2, dadurch gekennzeichnet, daß der erste Teil (30) eine Vielzahl von Ausschnitten (50) und der zweite Teile eine Vielzahl von flexiblen Lappen (52) zur Anordnung innerhalb der Vielzahl der Ausschnitte (50) beim Zusammenkuppeln der Teile (30, 32) aufweisen.

4. Stützplatteneinheit (12) nach einem der Ansprüche 1 bis 3, dadurch gekennzeichnet, daß die verstärkte Abschnitt (38) eine Stützwand (44), die mit dem Paar Bremsbacken (16, 18) in Eingriff bringbar ist, und eine Außenwand (46), die an die Stützwand (44) stößt, aufweist, wobei sich die Außenwand (46) von der Stützwand (44) nach innen erstreckt und im wesentlichen einen Kanal bildet, und daß der zweite Teil (32) benachbart zu diesem Kanal mit der Außenwand (46) verbunden ist.

5. Stützplatteneinheit (12) nach einem der Ansprüche 1 bis 4, dadurch gekennzeichnet, daß sich die Außenwand (46) axial nach innen an dem ebenen Abschnitt (42) vorbei erstreckt, so daß der verstärkte Abschnitt (38) einen Versteifungskanal bildet.

6. Stützplatteneinheit (12) nach einem der Ansprüche 1 bis 5, dadurch gekennzeichnet, daß sie desweiteren eine Vielzahl von zweiten Teilen (32) mit unterschiedlichen Abmessungen aufweist, die einer nach dem anderen am ersten Teil (30) befestigbar sind und dafür sorgen, daß unterschiedliche Größen von Bremsbackenpaaren mit dem ersten Teil (30) zusammenwirken, wobei der erste Teil (30) für diese unterschiedlichen Größen von Bremsbacken und ihre zugehörigen zweiten Teile (32) der gleiche bleibt.

**Revendications**

1. Ensemble plateau-support (12) pour un frein à tambour (10) avec une paire de sabots de frein (16, 18), comprenant une première partie (30) apte à être fixée à un châssis de véhicule et une seconde partie (32) coopérant avec le tambour (20) pour protéger substantiellement le frein à tambour contre les polluants, ladite première partie (30) définissant substantiellement une portion renforcée (38) à son extrémité radiale pour transmettre les forces de freinage développées pendant la freinage, ladite portion renforcée (38) pouvant en plus entrer en contact avec ladite paire de sabots de frein (16) pour diriger le déplacement de ces derniers pendant le freinage, ladite seconde partie (32) étant couplée à ladite portion renforcée (38) pour enfermer solidement le frein à tambour (10) entre l'ensemble (12) plateau-support et le tambour (20), et ladite seconde partie (32) étant d'une épaisseur et réalisée en un matériau qui est incapable de supporter ladite paire de sabots de frein et s'étendant substantiellement sur toute la circonférence extérieure de ladite première partie (30), caractérisé en ce que ladite première partie comporte une portion (42) substantiellement plate pour la fixation au châssis de véhicule, en ce que ladite portion renforcée (38) comporte une paroi intérieure (40) contiguë à ladite portion plate (42) et s'étendant axialement vers l'extérieur à partir de celle-ci, une paroi de soutien (44) en décalage de ladite portion plate (42) et pouvant entrer en contact avec ladite paire de sabots de frein, et une paroi extérieure (46) s'étendant axialement vers l'intérieur à partir de ladite paroi de soutien (44), et en ce que ladite seconde partie (32) est couplée à ladite paroi extérieure (46).

2. Ensemble plateau-support (12) suivant la revendication 1, caractérisé en ce que ladite première partie (30) et ladite seconde partie (32) coopèrent pour définir entr'elles un couplage débrayable pour permettre auxdites parties (30, 32) d'être facilement enclenchées pendant l'assemblage en l'absence d'autres moyens de couplage.

3. Ensemble plateau-support (12) suivant la revendication 2, caractérisé en ce que ladite première partie (30) définit une pluralité d'évidements (50) et ladite seconde partie (32) définit une pluralité d'attaches flexibles (52) adaptées pour se disposer à l'intérieur de ladite pluralité d'évidements (50) quand lesdites parties (30, 32) sont couplées l'une à l'autre.

4. Ensemble plateau-support (12) suivant l'une ou l'autre des revendications 1 à 3, caractérisé en ce que ladite portion renforcée (38) définit une paroi de soutien (44) qui peut toucher ladite paire de sabots de frein (16, 18) et une paroi extérieure (46) contiguë à ladite paroi de soutien (44), ladite paroi extérieure (46) s'étendant vers l'intérieur à partir de ladite paroi de soutien (44) pour définir substantiellement un canal, et en ce que ladite seconde partie (32) est couplée à ladite paroi extérieure (46) à proximité dudit canal.

5. Ensemble plateau-support (12) suivant l'une ou l'autre des revendications 1 à 4, caractérisé en ce que ladite paroi extérieure (46) s'étend axialement vers l'intérieur au-delà de ladite portion plate (42), ladite portion renforcée (38) formant ainsi un canal de renforcement.

6. Ensemble plateau-support (12) suivant l'une ou l'autre des revendications 1 à 5, caractérisé en ce qu'il comporte en supplément une pluralité de secondes parties (32) de dimensions différences aptes à être fixées à ladite première partie (30), une à la fois, ladite pluralité de secondes parties (32) prévoyant différentes dimensions de paires de sabots de frein coopérant avec ladite première partie (30), ladite première partie (30) restant de ce fait la même pour les différentes dimensions de sabots de frein et leurs secondes parties associées (32).

Fig. 1

0 124 419

Fig. 2

Fig. 3

Fig. 4

2